# EUROPÄISCHE PATENTSCHRIFT

(11) **EP 2 156 932 B1**
(45) Veröffentlichungstag und Bekanntmachung des Hinweises auf die Patenterteilung: **13.07.2011**
(21) Anmeldenummer: 09161128.5
(22) Anmeldetag: 26.05.2009
(51) Int. Cl.: B28B 7/38

(54) **Betontrennmittel**
Concrete separator
Moyen de séparation de béton

(30) Priorität: 29.07.2008 DE 102008035236
(43) Veröffentlichungstag der Anmeldung: 24.02.2010
(60) Teilanmeldung: 10150143.5
(73) Patentinhaber: Dyckerhoff AG, 65203 Wiesbaden (DE)
(72) Erfinder: Droll, Klaus, 55126 Mainz (DE)
(74) Vertreter: Solf, Alexander

(56) Entgegenhaltungen:
- EP-A- 0 773 091
- FR-A- 2 909 918
- BEYDOUN, D., AMAL, R., LOW, G. & MCEVOY, S.: "Role of nanoparticles in photocatalysis" JOURNAL OF NANOPARTICLE RESEARCH, Bd. 1, 1999, Seiten 439-458, XP002540903
- HOWE,R.F.: "Recent Developments in Photocatalysis" DEV.CHEM.ENG.MINERAL PROCESS., Bd. 6, Nr. 1/2, 1998, Seiten 55-84, XP002540904
- AHMED S.; OLLIS D.F.: 'Solar photoassisted catalytic decomposition of the chlorinated hydrocarbons trichloroethylene and trichloromethane' SOLAR ENERGY Bd. 32, Nr. 5, 1984, Seiten 597 - 601, XP025415817
- OHNO T. ET AL: 'Synergism between rutile and anatase TiO2 particles in photocatalytic oxidation of naphthalene' APPLIED CATALYSIS A: GENERAL 244 2003, Seiten 383 - 391, XP004421345
- EVONIK INDUSTRIES DEGUSSA AEROSIL: 'TECHNISCHES DATENBLATT: Aeroxide TiO2 P25', [Online] Gefunden im Internet: <URL:http://www.aerosil.com> [gefunden am 2010-01-26]

## Beschreibung

Die Erfindung betrifft ein Trennmittel, das als Bauhilfsstoff in der Betontechnologie zur Verhinderung des Verklebens eines Betonbauteils mit seiner Schalung bei der Betonage verwendbar ist.

Die Trennmittel werden in der Regel in einer Schicht von 10 - 50 µm vor dem Einbringen von Frischbeton auf die Schalung von zum Beispiel Ortbetonbauteilen und auf Formen von Betonfertigteilen aufgetragen. Sie sollen das Ausschalen erleichtern und dadurch die Anzahl der technisch möglichen Einsätze der Schalungen und Formen erhöhen.

An Trennmittel werden weitere Anforderungen gestellt. Hinsichtlich der Betontechnologie darf keine Beeinträchtigung der Erhärtungsvorgänge des Frischbetons auftreten. Oberflächenphänomene wie Absanden oder starkes Abmehlen auf den erhärteten Betonoberflächen müssen vermieden werden, insbesondere wenn eine Nachfolgebeschichtung wie Farbe oder Putz aufgebracht werden soll. Hinsichtlich der Verarbeitung muss ein dünner wirtschaftlicher Auftrag mit Resistenz gegen Witterungseinflüsse und geringer Neigung zur Aufnahme von Verschmutzungen gewährleistet sein. Der Schutz der Schalung vor Witterungseinflüssen und eine Reduktion des Reinigungsaufwandes der Schalungshaut sollen ebenfalls durch das Trennmittel ermöglicht werden. Zudem werden Umweltverträglichkeit und Arbeitshygiene von einem zeitgemäßen Trennmittel erwartet.

Die Trennmittel - auch Betontrennmittel oder Entschalungsmittel genannt - können Zusatzmittel beziehungsweise Additive aufweisen zum Beispiel Netzmittel, wie Detergentien oder Tenside, oder Wirkstoffe, die Schalungen aus organischen Werkstoffen, zum Beispiel aus Holz oder Kunststoff, zum Beispiel gegen Fäulnis, und Schalungen aus Metall gegen Korrosion schützen sollen.

Bekannte Zusätze sind zum Beispiel Rostschutzmittel, Antioxidantien, Antiporenmittel, Konservierungsmittel, Kriechhilfen, Wasserverdränger, Holzversiegler und Emulgatoren.

Grundstoffe für Betontrennmittel sind im Wesentlichen organische Stoffe wie Mineralöle mit und ohne Lösungsmittel, Schalölemulsionen auf Wasserbasis mit Pflanzenölen, Ester, teilweise auch Alkohole und Fettsäuren, Wachslösungen, Trennlacke, Esteröl-Betontrennmittel auf Trägersubstanzbasis von Pflanzenölen, wie Reiböl oder Rapsöl, oder Esterölen jeweils mit und ohne Zusatzmittel. Auf der Basis letzterer sind biologisch abbaubare Entschalungsmittel beziehungsweise Trennmittel entwickelt worden, die auch als Emulsionen verwendet werden. Durch den biologischen Abbau soll verhindert werden, dass Lösungsmittel- und/oder ölhaltige Produkte ins Erdreich gelangen und dass auf der Betonoberfläche kein Trennmittel verbleibt, weil Trennmittel auf der Betonoberfläche die Oberfläche zum Beispiel durch Fleckenbildung optisch beeinträchtigen oder das Auftragen von Farben oder Mörtel erschweren können. Der biologische Abbau findet jedoch sehr langsam statt.

An Trennmittel werden sehr viele Anforderungen gestellt. Hinsichtlich der Betontechnologie darf keine Beeinträchtigung der Erhärtungsvorgänge des Frischbetons auftreten. Oberflächenphänomene wie Absanden oder starkes Abmehlen auf den erhärteten Betonoberflächen müssen vermieden werden, insbesondere wenn eine Nachfolgebeschichtung wie Farbe oder Putz aufgebracht werden soll. Hinsichtlich der Verarbeitung muss ein dünner, wirtschaftlicher Auftrag mit Resistenz gegen Witterungseinflüsse und geringer Neigung zur Aufnahme von Verschmutzungen gewährleistet sein.

Der Schutz der Schalung vor Witterungseinflüssen und eine Reduktion des Reinigungsaufwandes der Schalungshaut sollen ebenfalls durch das Trennmittel ermöglicht werden. Zudem werden Umweltverträglichkeit und Arbeitshygiene von einem zeitgemäßen Trennmittel erwartet.

Schließlich sollen die Trennmittel vor und bei der Anwendung auch gegen Licht, insbesondere UV-Strahlung resistent sein.

Aufgabe der Erfindung ist ein Trennmittel zu schaffen, das während der Einsatzphase wirkt und sich nach dem Entschalen relativ schnell zersetzt, so dass keine schädlichen Stoffe aus dem Trennmittel ins Erdreich gelangen können und auch keine die Oberfläche beeinträchtigenden Rückstände auf der Betonoberfläche verbleiben.

Diese Aufgabe wird durch die Merkmale des Anspruchs 1 gelöst. Vorteilhafte Weiterbildungen der Erfindung werden in den Unteransprüchen gekennzeichnet.

Die Erfindung sieht vor, ein Trennmittel zur Beschichtung von Schalungsoberflächen insbesondere derzeit bekannter Zusammensetzung zu verwenden, dem auf organische Moleküle von Trennmitteln photokatalytisch wirkende Nanopartikel von TiO₂ und/oder ZnO, insbesondere auch mineralmodifizierten Nanopartikeln dieser Oxide mit jeweils einem breiteren Absorptionspektrum (z. B. DE 10 2005 057 770 A1, DE 10 2005 057 747 A1, WO 01/00541 A1) zugesetzt worden sind, die durch UV-Strahlung und/oder sichtbares Licht angeregt sauerstoffreiche Radikale bilden.

FR2909918 A1 offenbart eine Betontrennmittelkomposition enthaltend: 50 Gew.% Pflanzenöl, 16 Gew.% Calciumchlorid, 12 Gew.% TiO2 als Pigment und 22 Gew.% eines antieffloreszierenden Mittels. Die in FR2909918 A1 zu lösende Aufgabe ist es, möglichst homogene Oberflächen von geformten Betonprodukten zu erzielen.

Die Teilchen- beziehungsweise Partikelgrößen liegen zwischen 5 und 500 nm, insbesondere 20 und 100 nm. Die Nanoteilchen haben die Eigenschaft, unter Bestrahlung durch zum Beispiel Tageslicht eine Photokatalyse zu initiieren, bei der in der Nähe dieser Nanoteilchen befindliche organische Moleküle oxidieren und CO₂ bilden. Demgemäß werden die organischen Stoffe der Trägersubstanz, nämlich der Trennmittel, bei Umgebungstemperatur oxidiert und flüchtige Reaktionsstoffe gebildet. Die Trägersubstanz wird somit entfernt von der Betonoberfläche, an der nach der Entschalung wie auch an der Schalungsoberfläche immer Trennmittel haften bleibt.

Die Oxidation der Trennmittelbestandteile hinterlässt in überraschender Weise in ausreichender Menge Nanoteilchen auf der Betonoberfläche und/oder im Oberflächenbereich dauerhaft haftend. Die Nanopartikel setzen sich vornehmlich in Vertiefungen, im Kapillarsystem und Poren der Betonoberfläche fest.

Diese anhaftenden Nanopartikel bewirken synergistisch durch photokatalytische Aktivität die an sich bekannte Reinigung der sie umgebenden Luft, die Stickoxyde wie NOₓ oder NO und SO₂ aufweist.

Bekannt ist die Anordnung von Metalloxydfilmbeschichtungen auf Licht ausgesetzten Baukörpern, insbesondere auch auf Betonbaukörpern (EP 590 477 A1). Verwendet werden zum Beispiel als Metalloxyde Titandioxyd, Eisenoxyd, Silberoxyd, Kupferoxyd, Wolframoxyd, Aluminiumoxyd, Siliziumoxyd, Zinkoxyd sowie Strontiumtitanat. Die Filmbeschichtung soll dauerhaft sein, weshalb die Beschichtung wärmebehandelt wird, so dass dann der Film nicht bricht oder abschält (DE 693 11 866 T2). Bekannt ist in diesem Zusammenhang auch, den Filmen, die die Nanopartikel mit den photokatalytischen Eigenschaften aufweisen, zur Verstärkung der photokatalytischen Wirkung der Nanopartikel ein zweites Metall zuzugeben.

Basis für die Trennmittel sind die im Anspruch 1 genannten Trennmittelzusammensetzungen insbesondere auch biologisch abbaubare und insbesondere nicht oder nur schwer abbaubare, denen die Photokatalysator-Nanopartikel in Form einer Nanopartikeldispersion beigemengt sind. Es kann sich dabei um wasseremulgierte Trennmittel (Emulsionen oder Esteröle) oder um Trennmittel auf Kohlenwasserstoffbasis (Mineralöle oder Mineralöle mit Lösungsmittel wie Testbenzine als Lösungsmittel) handeln. Die Zusatzmenge wird so gewählt, dass ein Abbau und eine Verflüchtigung innerhalb von 1 bis 24 Stunden, insbesondere von 1 bis 4 Stunden, erfolgen kann bei Tageslichteinwirkung.

Bewährt haben sich zum Beispiel die folgenden Zusatzmengen:
15 - 30, insb. 18 - 25 Gew.% TiO₂-Suspension (30-50%ig) im Wesentlichen aus TiO₂-nanoskalierten Teilchen und Wasser
Rest jeweils Trennmittel

Die Erfindung befasst sich somit im Wesentlichen mit der Modifizierung von Betonoberflächen durch speziell ausgerüstete Trennmittel, die neben ihrer Trennwirkung beim Entschalen zusätzlich eine Oberflächenmodifizierung des Betons herbeiführen.

## Patentansprüche

1. Betontrennmittel auf der Basis von Mineralöl ohne Lösungsmittel, Mineralöl mit Lösungsmittel, Emulsionen oder Esteröl, enthaltend beigemengt auf organische Moleküle des Trennmittels photokatalytisch wirkende Nanopartikel in Form einer 30 bis 50%ige wässrige Nanopartikel-Suspension, wobei die Nanopartikel TiO₂ - und/oder ZnO-Partiket sind, und die Nanopartikel bei Größen zwischen 5 und 500 Nanometer liegen.

2. Betontrennmittel nach Anspruch 1
**dadurch gekennzeichnet,**
**dass** die Nanopartikel bei Größen zwischen 20 und 100 Nanometer liegen.

3. Betontrennmittel nach Anspruch 1 und/oder 2,
**dadurch gekennzeichnet,**
**dass** das Betontrennmittel ein biologisch nicht oder nur schwer biologisch abbaubares Trennmittel ist.

4. Betontrennmittel nach einem oder mehreren der Ansprüche 1 bis 3,
**dadurch gekennzeichnet,**
**dass** es photokatalytisch wirkende mineralmodifizierte Nanopartikel mit auch im sichtbaren Licht wirkenden Absorptionspektren enthält.

5. Betontrennmittel nach einem oder mehreren der Ansprüche 1 bis 4,
**dadurch gekennzeichnet,**
**dass** eine Menge der Nanopartikel enthalten ist, die bewirkt, dass durch Tageslichteinwirkung nach dem Entschalen die organischen Bestandteile abgebaut werden.

## Claims

1. Concrete release agent based on mineral oil without solvent, mineral oil with solvent, emulsions or ester oil comprising, admixed with organic molecules of the separating agent, photocatalytically active nanoparticles in the form of a 30 to 50% aqueous nanoparticle suspension, said nanoparticles being TiO₂ and/or ZnO particles, and said nanoparticles having sizes between 5 and 500 nanometres.

2. Concrete release agent according to Claim 1,
**characterized in that**
the nanoparticles have sizes between 20 and 100 nanometres.

3. Concrete release agent according to Claim 1 and/or 2,
**characterized in that**
the concrete release agent is a nonbiodegradable or only sparingly biodegradable release agent.

4. Concrete release agent according to one or more of Claims 1 to 3,
**characterized in that**
it comprises photocatalytically active mineral-modified nanoparticles with absorption spectra which are also active in visible light.

5. Concrete release agent according to one or more of Claims 1 to 4,
**characterized in that**
the nanoparticles are present in an amount which has the effect that the action of daylight after demoulding degrades the organic constituents.

## Revendications

1. Produit de démoulage du béton à base d'huile minérale sans solvant, d'huile minérale avec solvant, d'émulsions ou d'huile estérifiée, contenant une addition de nanoparticules agissant photocatalytiquement sur les molécules organiques du produit de démoulage, sous la forme d'une suspension aqueuse à 30 à 50 %, dans lequel les nanoparticules sont des particules de TiO₂ ou de ZnO et les nanoparticules ayant des tailles comprises entre 5 et 500 nanomètres.

2. Produit de démoulage du béton selon la revendication 1,
**caractérisé en ce que**
les nanoparticules ont des tailles comprises entre 20 et 100 nanomètres.

3. Produit de démoulage du béton selon l'une quelconque des revendications 1 et/ou 2,
**caractérisé en ce que**
le produit de démoulage du béton est un produit de démoulage biologiquement non dégradable ou difficilement dégradable.

4. Produit de démoulage du béton selon une ou plusieurs des revendications 1 à 3,
**caractérisé en ce que**
il contient des nanoparticules minéralement modifiées à effet photocatalytique avec des spectres d'absorption agissant aussi dans la lumière visible.

5. Produit de démoulage du béton selon une ou plusieurs des revendications 1 à 4,
**caractérisé en ce que**
il contient une quantité de nanoparticules qui a pour effet qu'après le démoulage, les composants organiques sont décomposés par l'action de la lumière du jour.
